Europäisches Patentamt

European Patent Office

Office européen des brevets

(11) Veröffentlichungsnummer: **0 297 408**
**A2**

## EUROPÄISCHE PATENTANMELDUNG

(21) Anmeldenummer: 88109895.8

(22) Anmeldetag: 22.06.88

(51) Int. Cl.⁴: **C10B 53/00 , B01J 8/24**

(30) Priorität: 27.06.87 DE 3721341

(43) Veröffentlichungstag der Anmeldung:
04.01.89 Patentblatt 89/01

(84) Benannte Vertragsstaaten:
AT BE CH DE GB IT LI NL SE

(71) Anmelder: **Asea Brown Boveri**
**Aktiengesellschaft**
**Kallstadter Strasse 1**
**D-6800 Mannheim-Käfertal(DE)**

(72) Erfinder: **Häuser, Ulrich, Dr.**
**Ketteler Strasse 11**
**D-6806 Viernheim(DE)**
Erfinder: **Schemenau, Wolfgang**
**Danziger Strasse 15**
**D-6947 Laudenbach(DE)**

(74) Vertreter: **Rupprecht, Klaus, Dipl.-Ing. et al**
**c/o BBC Brown Boveri Aktiengesellschaft**
**ZPT Postfach 100351 Kallstadter Strasse 1**
**D-6800 Mannheim 1(DE)**

(54) Verfahren zum thermischen Zersetzen von Abfallmaterial sowie Wirbelbettreaktor zur Durchführung des Verfahrens.

(57) Bei der thermischen Zersetzung von Kunststoffabfällen in einem Pyrolyse-Wirbelbettreaktor (10) wird das Abfallmaterial durch einen Zufuhrkanal (22, 42), der mit einer Gleitschicht ausgekleidet ist oder der eine glatte, gleitfreudige Wand aus Stahl aufweist, dem Wirbelbettreaktor (10) zugeführt. Gleichzeitig wird der Pyrolyserückstand, der durch einen Abfuhrkanal (68) aus dem Wirbelbettreaktor (10) abgeführt wird, im Abfuhrkanal (68) durch das Einblasen eines Gases aufgelockert.

Durch diese Maßnahmen wird ein störungsfreier Materialfluß erreicht und die Betriebssicherheit der Anlage erhöht.

Fig.1

EP 0 297 408 A2

## Verfahren zum thermischen Zersetzen von Abfallmaterial sowie Wirbelbettreaktor zur Durchführung des Verfahrens

Die Erfindung betrifft ein Verfahren zum thermischen Zersetzen von Kohlenwasserstoffe enthaltendem Abfallmaterial, insbesondere Kunststoff- und oder Gummiabfälle enthaltendem Abfallmaterial, in einem Wirbelbett-Pyrolysereaktor, wobei der Pyrolysereaktor unter Verwendung mindestens eines von oben nach unten verlaufenden Zufuhrkanals mit dem Abfallmaterial beschickt wird, und der Pyrolyserückstand unter Verwendung mindestens eines von oben nach unten verlaufenden Abfuhrkanals aus dem Pyrolysereaktor entfernt wird. Weiter betrifft die Erfindung einen Wirbelbett-Pyrolysereaktor zur Durchführung des Verfahrens.

Die Sicherheit eines Verfahrens der eingangs genannten Art hängt zu einem nicht geringen Teil ab von einer kontinuierlichen und störungsfreien Zufuhr des Abfallmaterials zum Pyrolysereaktor sowie von einer störungsfreien Abfuhr des Pyrolyserückstands aus dem Pyrolysereaktor.

Obwohl für den Transport der vorgenannten Materialien oft Schneckenförderer eingesetzt werden, kommt es doch zu Verstopfungen der Kanäle oder zu Stockungen des Materialflusses. Dies trifft selbst dann zu, wenn das Ausgangsmaterial im Verhältnis zum Querschnitt des Zufuhrkanals klein ist. Da der Pyrolyserückstand, der aus dem Pyrolysereaktor ausgetragen werden muß, neben dem Abfallrückstand noch feinkörniges Wirbelmedium, vorzugsweise aus der Gruppe Sand, Aluminiumoxid. Koks. Ruß oder dergleichen sowie unverbrauchte Zuschlagstoffe enthält, kommt es leicht zu Verstopfungen oder Stockungen des Materialflusses im Abfuhrkanal.

Der Erfindung liegt daher die Aufgabe zugrunde, die Brauchbarkeit des eingangs genannten Verfahrens zu verbessern und insbesondere einen sicheren, störungsfreien Materialfluß im Zufuhr- und Abfuhrkanal zu erreichen. Weiter ist es Aufgabe vorliegender Erfindung, einen Wirbelbett-Pyrolysereaktor zur Durchführung des Verfahrens anzugeben, der einen einfachen, kostengünstigen Aufbau aufweist, und der den im Betrieb auftretenden Belastungen voll gewachsen ist.

Die Lösung dieser Aufgabe besteht bei einem Verfahren der eingangs genannten Art erfindungsgemäß darin, daß die Beschickung mit Hilfe eines Zufuhrkanals mit glatter und den Fluß des Abfallmaterials fördernder Innenfläche erfolgt, und daß der Pyrolyserückstand im Abfuhrkanal zumindest im Bereich der Innenwand in einem den Abfluß des Pyrolyserückstandes unterstützendem Ausmaß durch das Einleiten eines gasförmigen Mediums aufgelokkert wird. Es wird also die Innenwand des Zufuhrkanals durch eine Gleitschicht oder durch entsprechende Bearbeitung möglichst glatt und gleitfreudig ausgebildet, so daß eine Wandreibung kaum vorhanden ist, welche den Fluß des Abfallmaterials bremsen oder behindern könnte. Für den Fluß des Abfallmaterials in dem ungefähr vertikal verlaufenden Zufuhrkanal genügt daher das Eigengewicht dieses Materials. Für den Abfluß des Pyrolyserückstands im ungefähr vertikalen Abfuhrkanal ist eine ebensolche Ausbildung der Innenwand zwar vorteilhaft, doch führt diese Maßnahme nicht zu dem gewünschten Erfolg. Das ist darin begründet, daß sich der Pyrolyserückstand aus dem eigentlichen Abfallrückstand, restlichen Zuschlagstoffen und dem Wirbelbettmaterial, vorzugsweise Sand, zusammensetzt und daher den Abflußkanal weitgehend lückenlos und stopfenartig ausfüllt. Es wird daher ein gasförmiges Medium vorzugsweise in dem Bereich der Innenwand des Abfuhrkanals eingeblasen. Hierdurch wird der wandnahe Bereich des Pyrolyserückstands aufgelockert, so daß der sich im Kernbereich des Abflußkanals befindende Pyrolyserückstand durch Schwerkraft weitgehend frei und ungebremst zum Austrag hin bewegt. Insgesamt gesehen wird durch die erfindungsgemäße Verknüpfung der beiden Maßnahmen ein sicherer, zumindest weitgehend störunsfreier Betrieb des Wirbelbett-Pyrolysereaktors ermöglicht.

Obwohl es natürlich am günstigsten wäre, den Pyrolyserückstand über die gesamte Länge des Abflußkanals aufzulockern, genügt es in den meisten Fällen, wenn vorteilhaft der Pyrolyserükstand nur in der Nähe der Verbindung von Abfuhrkanal und Pyrolysereaktor aufgelockert wird. Hierbei ist es am besten, wenn der Pyrolyserückstand periodisch und stoßweise aufgelockert wird. Als gasförmiges Medium für das Auflockern wird zweckmäßig das Wirbelgas eingesetzt, das für die Bildung des Wirbelbettes im Pyrolysereaktor dient. Die Einleitungsgeschwindigkeit des gasförmigen Mediums in den Abfuhrkanal wird zweckmäßig so gewählt, daß eine Verwirbelung oder gar die Ausbildung eines Wirbelbettes im Abfuhrkanal vermieden ist, sondern lediglich eine Lockerung des Pyrolyserückstands erfolgt. Eine Verwirbelung wäre ungünstig, sie würde in unerwünschter Weise den Abfuhrkanal zur thermischen Zersetzung des Abfallmaterials mit heranziehen und einen ungewollten Austritt von Wirbelgas und Pyrolysegas durch den Abflußkanal ermöglichen. Zudem wäre der Abfuhrkanal thermisch hoch belastet. Die Einleitungsgeschwindigkeit des gasförmigen Mediums in den Abfuhrkanal beträgt zweckmäßig 2 bis 6 m/s, vorzugsweise 3 bis 4 m/s. Hierdurch wird eine auseichende Lockerung des Pyrolyserückstandes erzielt. Eine Verwirbelung des Pyrolyserückstandes findet hierbei nicht statt, hierzu wären höhere Gasgeschwindigkeiten erforderlich. Zum Vergleich ist die Eintrittsgeschwindigkeit des Wirbelgases in den Pyrolysereaktor angegeben. Sie beträgt 8 bis 20 m/s, vorzugsweise 10 bis 15 m/s.

Ein besonders bevorzugter Wirbelbett-Pyrolysereaktor zur Durchführung des Verfahrens ist vorteilhaft dadurch gekennzeichnet, daß der Zufuhrkanal auf seiner Innenfläche mit einer Gleitschicht, vorzugsweise aus der Gruppe Tetrafluoräthylen, Polytetrafluoräthylen oder Emaille versehen ist, oder daß der Zufuhrkanal eine Innenwand aufweist, die durch Bearbeitung wie Schleifen und/oder Polieren geglättet ist, und daß der Abfuhrkanal mit Einlaßöffnungen versehen ist, die an seinem Umfang verteilt angeordnet sind und die mit dem gasförmigen Medium beaufschlagbar sind. Durch die Beschichtung der Innenfläche des Zufuhrkanals mit einer Gleitschicht wird ein praktisch reibungsloser Fluß des Abfallmaterials erreicht. Das gleiche Ergebnis wird auch dann erzielt, wenn die Wand des Zufuhrkanals durch Bearbeitung eine glatte, reibungsarme Oberfläche aufweist. Zweckmäßig wird für die Wand des Abfuhrkanals ein nichtrostender austenitischer Stahl benutzt, der 17 bis 19 % Chrom, 9 bis 11,5 Nickel und einen Titangehalt in % von $\geq$ 5 mal Kohlenstoffgehalt in Prozent enthält. Diese Angaben sind Gewichtsprozente. Ein Stahl dieser Art ist unter der DIN-Bezeichnung X10CrNiTi 18 9 handelsüblich. In USA ist ein solcher Stahl unter der Norm AISI mit der Bezeichnung TP 321 versehen. Bezüglich des Abfuhrkanals sind vorteilhaft Einlaßdüsen oder Einlaßöffnungen vorgesehen, die an seinem Umfang gleichmäßig verteilt und zweckmäßig in einer Ebene angeordnet sind. Diese Einlaßdüsen oder Einlaßöffnungen werden durch das gasförmige Medium beaufschlagt und lockern zumindest den randnahen Bereich des Pyrolyserückstands im Abfuhrkanal auf.

Es ist empfehlenswert, daß der Zufuhrkanal an seinem unteren Ende an eine, vorzugsweise horizontal verlaufende und an den Innenraum des Pyrolysereaktors angeschlossene Förderschnecke mündet. Hierdurch sind Verstopfungen und/oder Stockungen im Bereich des Übergangs in den Pyrolysereaktor vermieden und die Zufuhr des Abfallmaterials kann mit Hilfe der Förderschnecke leicht dosiert werden.

Um einen Gasaustritt aus dem Pyrolysereaktor zu vermeiden, empfiehlt es sich, daß der Zufuhrkanal an seinem oberen Endbereich eine Einlaufschleuse vorzugsweise in Form von zwei mit Abstand angeordneten Absperrorganen aufweist. Hierbei ist es besonders günstig, wenn auch für jenes Teilstück des Zufuhrkanals, das sich zwischen den beiden Absperrorganen befindet, eine Ausbildung gemäß Anspruch 5 gewählt wird, die eine glatte Innenwand aufweist. Es empfiehlt sich, zwei Zufuhrkanäle vorzusehen und diese diametral gegenüberliegend am Pyrolysereaktor anzuordnen. Dies gestattet dem Pyrolysereaktor möglichst viel Abfallmaterial in der Zeiteinheit zuzuführen. Da das Volumen der Pyrolyserückstände im Verhältnis zum Ausgangsmaterial geringer ist, genügt es, den beiden Zufuhrkanälen lediglich einen einzigen Abfuhrkanal zuzuordnen.

Um das Abfallmaterial den beiden Zufuhrkanälen mit möglichst geringem Aufwand zuzuleiten ist es zweckmäßig, daß die Zufuhrkanäle an den oberen Enden mit Einlaßtrichtern versehen sind, daß über den Einlaßtrichtern jeweils ein Abwurfende eines ungefähr horizontal verlaufenden Förderbandes vorgesehen ist, dessen Förderrichtung zur wechselweisen Beschickung der beiden Zufuhrkanäle umkehrbar ist. Hierbei ist es vorteilhaft, daß das Förderband unter Zwischenschaltung einer Wiegevorrichtung mit dem kleinstückigen Abfallmaterial beschickbar ist. So kann der Durchsatz an Abfallmaterial bestimmt werden. Pulverförmiges Zuschlagmaterial zur Schadstoffbildung, vorzugsweise Schwefel- und/oder Chlorverbindung, sowie Wirbelmaterial, insbesondere Sand, wird in ausreichendem Maße direkt in den Pyrolysereaktor eingegeben.

Das untere Ende des Abfuhrkanals ist vorteilhaft an eine Abfuhrschnecke angeschlossen, deren Auslaß unter Zwischenschaltung einer Auslaßschleuse, vorzugsweise einer Zellenradschleuse, mit einer Siebmaschine verbunden ist, die das im Pyrolyserückstand mitgeführte Wirbelmaterial und gegebenenfalls Zuschlagrückstände abtrennt. Hierdurch wird das Wirbelmaterial zurückgewonnen und vorteilhaft einem Silo zugeführt, von dem es dem Pyrolysereaktor wieder zugeleitet werden kann, während der Abfallrückstand einem Bunker zugeführt wird.

Gemäß einer bevorzugten Weiterbildung der Erfindung ist die Siebmaschine gegenüber dem Außenraum gasdicht gekapselt, so daß das vom Pyrolyserückstand mitgeführte Wirbel- und oder Pyrolysegas abgesaugt und abgeleitet werden kann. Hierdurch kann im Bereich der Siebmaschine keine Vermischung des Pyrolyse- und/oder Wirbelgases mit Luft entstehen, die Bildung von explosiblen Gemischen ist daher vermieden.

Zur Vereinfachung der Montage und Überwachung der Einlaßdüsen empfiehlt es sich, die Einlaßöffnungen an einem Übergangsstück anzuordnen, das Bestandteil des Abfuhrkanals ist und dessen oberes Ende mit dem Innenraum des Pyrolysereaktors verbunden ist. Hierbei ist es zweckmäßig daß mindestens acht Einlaßöffnungen verteilt am Umfang des Abfuhrkanals, vorzugsweise in einer Ebene. angeordnet sind.

Weitere Vorteile und Merkmale der Erfindung gehen aus der folgenden Beschreibung von Ausführungsbeispielen im Zusammenhang mit den - schematischen Zeichnungen hervor, die einen Wirbelbett-Pyrolysereaktor zeigen, der für die Durchführung des Verfahrens geeignet ist.

In den Zeichnungen zeigt:

Figur 1 einen vertikalen Zentralschnitt durch einen Wirbelbett-Pyrolysereaktor gemäß der Erfindung.

Figur 2 den Ausschnitt II der Figur 1 als Einzelheit und in größerer Schnittdarstellung,

Figur 3 den Gegenstand der Figur 2 als Ausführungsvariante und

Figur 4 den Bereich III der Einlaßöffnungen gemäß Figur 1 als Einzelheit und in größerer Darstellung.

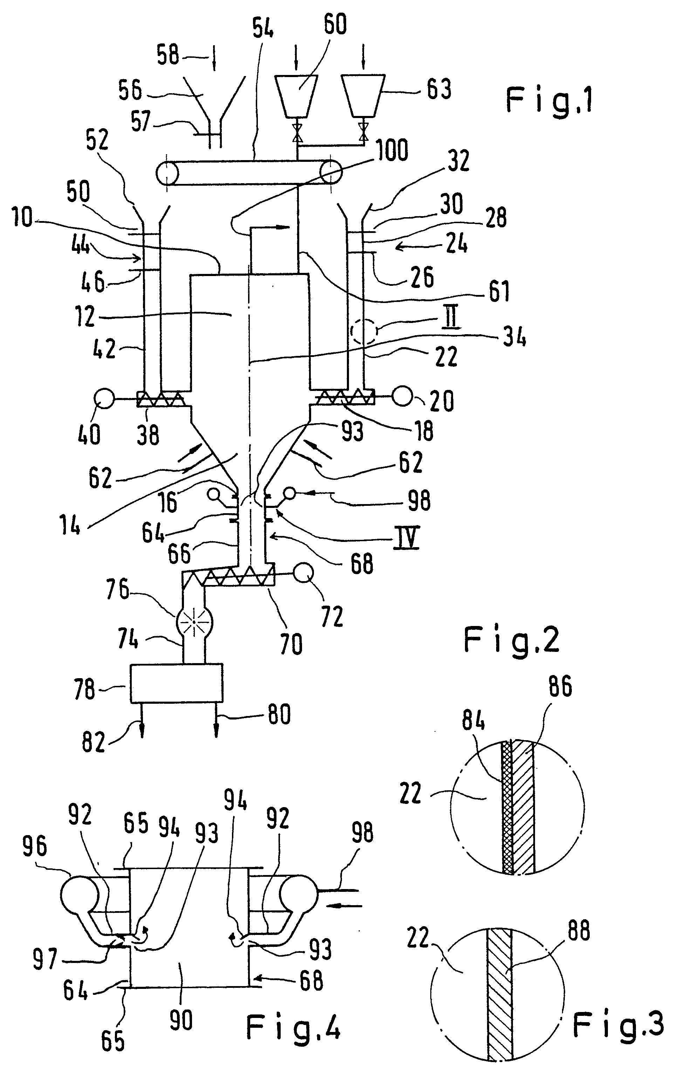

Gemäß Figur 1 weist der stehende Wirbelbett-Pyrolysereaktor 10 einen Innenraum 12 auf, dessen Querschnitt kreisförmig ist. Der obere Bereich des Innenraums 12 ist hierbei zylinderförmig ausgebildet. wogegen sich der untere Bereich 14 kegelförmig nach unten hin verjüngt und in einen Ausgangsstutzen 16 übergeht. Der untere Bereich 14 hat eine vertikale Höhe, die ungefähr 25 bis 40% der Gesamthöhe des Pyrolysereaktors beträgt.

Am Übergang vom unteren Bereich 14 zum zylindrischen oberen Bereich des Innenraums 12 mündet - in der Zeichnung rechts des Pyrolysereaktors - der Ausgang einer ersten Förderschnecke 18 in den Innenraum 12. Der Antrieb der Förderschnecke erfolgt hierbei durch den Motor 20. An den rechtwinklig nach oben zeigenden Eingang der ersten Förderschnecke 18 ist der vertikal verlaufende erste Zufuhrkanal 2 angeschlossen, der sich im vorliegenden Ausführungsbeispiel ungefähr bis zum oberen Ende des Pyrolysereaktors erstreckt. Dort ist an den ersten Zufuhrkanal 22 eine erste Einlaufschleuse 24 angeschlossen, die, ausgehend vom ersten Zufuhrkanal, ein erstes Absperrorgan 26, einen vertikal verlaufenden Teilkanal 28 sowie ein daran angeschlossenes zweites Absperrorgan 30 umfaßt. Dieses Absperrorgan weist noch einen nach oben zeigenden, offenen ersten Einlaßtrichter 32 auf. Die Zufuhrkanäle 22 und 42 haben kreisförmigen Querschnitt von gleicher Größe.

Spiegelbildlich zu einer Ebene, die durch die Vertikalachse 34 des Pyrolysereaktors verläuft und senkrecht auf der Zeichenebene steht, sind eine zweite Förderschnecke 38 mit zweitem Antriebsmotor 40, der zweite Zufuhrkanal 42 sowie eine zweite Einlaufschleuse 44 angeordnet. Die zweite Einlaufschleuse weist hier ein drittes Absperrorgan 46 auf, das das obere Ende des zweiten Einlaßkanals 42 mit dem zweiten Teilkanal 44 verbindet. Am oberen Ende des zweiten Teilkanals ist das vierte Absperrorgan 50 vorgesehen, an den sich der nach oben offene, zweite Einlaßtrichter 52 anschließt. Der Aufbau dieser Anordnung links und rechts des Pyrolysereaktors 10 ist also weitgehend identisch. Die Absperrorgane bestehen zweckmäßig aus Absperrschiebern, die jeweils durch einen Motor geöffnet und geschlossen werden. Der lichte Durchmesser der Zufuhrkanäle 22 und 42 beträgt das 0,2 bis 0,35-fache, vorzugsweise das 0,25 bis 0,3-fache des lichten Durchmessers des Innenraums 12 des Pyrolysereaktors im zylindrischen Bereich. Die Längen der Zufuhrkanäle sind so gewählt, daß sie sich mindestens bis zum oberen Ende des Pyrolysereaktors 10 erstrecken. Die Längen betragen meist das 6- bis 10-fache des lichten Durchmessers der Zufuhrkanäle. In manchen Fällen, wie Pyrolysereaktoren kleiner Leistung, ist zweckmäßig nur ein einziger Zufuhrkanal erforderlich. In anderen Fällen, wie Pyrolysereaktoren großer Leistung, sind vorteilhaft mehr als zwei Zufuhrkanäle vorzusehen.

Oberhalb der Einlaßtrichter 32, 52 ist ein horizontal verlaufendes Förderband 54 angeordnet, das sich vom einen bis zum anderen Einlaßtrichter 32, 52 derart erstreckt, daß auf das Förderband aufgebrachtes Abfallmaterial bei Rechtsbewegung des Förderbandes in den ersten Einlaßtrichter 32, bei Linksbewegung dagegen in den zweiten Einlaßtrichter 52 abgeworfen wird. Um diese Links- und Rechtsbewegung des Förderbandes 54 zu bewirken, ist das Förderband mit einem reversierbaren Antrieb ausgerüstet, der in der Zeichnung nicht dargestellt ist. Auf das Förderband 54 mündet der Auslaß eines Speisetrichters 56, der gleichzeitig als Waage ausgebildet ist. so daß das auf das Förderband gegebene Abfallmate rial abgewogen werden kann. Die Eingabestelle des Abfallmaterials in den Speisetrichter 56 ist durch einen Pfeil 58 angedeutet. Der Auslaß des Speisetrichters 56 ist mit einem Absperrschieber 57 versehen.

Der für die Ausbildung des Pyrolyse-Wirbelbettes erforderliche Wirbelsand ist in einem Wirbelsandbehälter 60 gelagert und wird durch eine Rohrleitung 61 direkt in den Innenraum 12 des Pyrolysereaktors geleitet. Ebenso sind die Zuschlagstoffe in Behältern gelagert und werden direkt in den Innenraum 12 eingeführt. In Figur 1 ist ein Behälter 63 für Zuschlagstoffe gezeigt, der mit der Rohrleitung 61 verbunden ist. Der Wirbelsand und die Zuschlagstoffe haben eine Korngröße von ungefähr 0,5mm.

In den kegelförmigen, unteren Bereich 14 des Pyrolysereaktors münden Rohrleitungen 62, durch die, ggf. über Einlaßdüsen, das zur Ausbildung der Wirbelschicht im Innenraum 12 erforderliche Wirbelgas zugeführt wird. Dieses Wirbelgas besteht vorzugsweise aus Pyrolysegas.

An den Ausgangsstutzen 16 des Pyrolysereaktors ist ein vertikal verlaufendes Übergangsstück 64 angeschlossen, an das sich ein weiter nach unten führendes Kanalstück 66 anschließt. Die Anschlüsse erfolgen jeweils durch Flansche 65 (Fig. 4). Das Übergangsstück 64 und das Kanalstück 66 bilden gemeinsam den vertikalen Abfuhrkanal 68, der unten an den Einlaß eines horizontal verlaufenden Abfuhr-Schneckenförderers 70 mit Antriebsmotor 72 angeschlossen ist. Der Ausgang des Schneckenförderers 70 ist durch einen vertikal verlaufenden Kanal 74 unter Zwischenschaltung einer Auslaßschleuse 76, zweckmäßig in Form einer Zellenradschleuse mit einer Siebvorrichtung 78 verbunden. Diese trennt den Pyrolyserückstand in den eigentlichen pyrolysierten Abfallrückstand und den mit geführten Wirbelsand samt unverbrauchten Zuschlagstoffen, die durch die Leitung 80 abgezogen und dem Wirbelsandbehälter 60 bzw. Behälter 63 zugeführt werden. Der eigentliche stückige Pyrolyserückstand wird durch die Leitung 82 abgezogen. Der durch die Leitung 80 abgeführte Wirbelsand enthält noch Restbestandteile des Zuschlagstoffes, der zur Schwefel- oder Chlorbindung in den Pyrolysereaktor gegeben wurde.

Das Übergangsstück 64 und das Kanalstück 66 haben kreisförmigen Querschnitt mit gleichem lichten Durchmesser. Der lichte Durchmesser von Übergangsstück 64 und Kanalstück 66 beträgt jeweils ungefähr das 0,2 bis 0,5-fache, vorzugsweise das 0,3 bis 0,4-fache des lichten Durchmessers des Innenraums 12 des Pyrolysereaktors im zylindrischen Bereich. Die Länge des Übergangsstückes 64 beträgt ungefähr höchstens das 1-fache, die Länge des Kanalstückes 66 höchstens ungefähr das 1,5-fache des lichten Durchmessers des Übergangsstückes 64 bzw. des Kanalstückes 66. Zweckmäßig werden das Übergangsstück 64 und das Kanalstück 66 möglichst kurz ausgeführt.

In Figur 2 ist der Ausschnitt II der Figur 1 als Einzelheit, vergrößert und im Vertikalschnitt dargestellt. Man erkennt den ersten Zufuhrkanal 22, dessen Innenwand mit einer Gleitschicht 84 versehen ist. Der Zufuhrkanal hat, wie übrigens alle hier beschriebenen Kanäle, kreisförmigen Querschnitt, er wird also von einem Rohr begrenzt. Wie aus Figur 2 ersichtlich, ist die Gleitschicht 84 auf der Innenwand des Rohres 86 aufgebracht. Ihre Dicke beträgt ungefähr 0,5 bis 1mm. Das Material dieser Gleitschicht besteht aus Tetrafluoräthylen, Polytetrafluoräthylen oder einem glasartigen Überzug wie Emaille, wobei eine Temperaturebeständigkeit bis ungefähr 200° C gefordert ist. Diese Gleitschicht vermindert die innere Rohr reibung derart, daß das durch den Zufuhrkanal 22 fließende Abfallmaterial ohne Stockung zur ersten Förderschnecke 18 hin fließt. Stößt das Aufbringen einer Gleitschicht auf Schwierigkeiten und/oder sind die vorgesehenen Gleitschichten nicht ausreichend temperaturbeständig, so ist gemäß einer Ausführungsvariante nach Figur 3 das den Abfuhrkanal 22 begrenzende Rohr 88 innen durch Bearbeitung, zweckmäßig durch Schleifen und/oder Polieren vollständig glatt und gleitfreudig ausgebildet. Besonders glatte Oberflächen bei gleichzeitiger Temperaturbeständigkeit ergeben sich dann, wenn das Rohr 88 aus einem Stahlt besteht, dessen Zusammensetzung weiter oben genannt wurde. Der zweite Zufuhrkanal 42 ist bezüglich seiner Innenwand genauso ausgebildet wie der eben besprochene erste Zufuhrkanal 22.

Das Übergangsstück 64 des Abfuhrkanals 68 ist in Figur 4 vergrößert und als Einzelheit im Vertikalschnitt dargestellt. In den Innenraum 90 des Übergangsstückes 64 münden Zufuhrleitungen 92. Es sind vorzugsweise acht Stück solcher Zufuhrleitungen vorgesehen, die gleichmäßig verteilt am Umfang angeordnet sind und vorzugsweise in einer Ebene verlaufen. Die lichte Weite der Zufuhrleitungen 92 ist gering im Verhältnis zum Querschnitt des Innenraums 90. Der lichte Durchmesser der Zufuhrleitungen 92 beträgt jeweils das 0,01 bis 0,10-fache, vorzugsweise das 0.02 bis 0,07-fache des lichten Durchmessers des Innenraums 90. Die Einlaßöffnungen 93 der Zufuhrleitungen 92 sind im Innenraum 90 durch schräg von oben nach unten verlaufende Abschirmungen 94 in Form von Blechen abgedeckt, so daß zwar gasförmiges Medium aus den Zufuhrleitungen 92 in den Innenraum 90 überströmen kann, ein Eindringen von Pyrolyserückstand in die Zufuhrleitungen 92, wie aus Figur 4 deutlich ersichtlich, verhindert oder doch zumindest weitgehend verhindert ist. Die Abschirmungen 94 sollen möglichst wenig in den Innenraum 90 ragen. Die Zufuhrleitungen 92 verlaufen zumindest an ihrem Endbereich mit Steigung nach oben und münden in eine Ringleitung 96, die das Übergangsstück umgibt. An die Ringleitung 96 ist eine Rohrleitung 98 angeschlossen, durch die das für die Auflockerung des Pyrolyserückstands vorgesehene gasförmige Medium zugeführt wird. Dies besteht zweckmäßig aus Pyrolysegas. Das Übergangsstück 64 ist durch Flansche 65 an den Pyrolysereaktor sowie an das Kanalstück 66 angeschlossen.

Die Einlaßöffnungen 93 haben vom oberen Ende des Übergangsstückes 64 einen Abstand, der vorzugsweise ungefähr gleich ist dem 0,4 bis 0,8-fachen des lichten Durchmessers des Übergangsstückes 64. Manchmal ist es zweckmäßig, im Kanalstück 66 zusätzlich weitere Einlaßöffnungen anzuordnen. Diese weiteren Einlaßöffnungen arbeiten dann auf die gleiche Weise wie die Einlaßöffnungen 93. Der Abstand der weiteren Einlaßöffnungen vom oberen Ende des Kanalstückes 66 beträgt ungefähr das 0,4 bis 0,8-fache des lichten Durchmessers des Kanalstückes 66.

An sämtlichen Einlaßöffnungen 93 der Zufuhrleitungen 92 sind gemäß einer vorteilhaften Alternative Düsen 97 angeordnet, durch die das gasförmige Medium dem Innenraum 90 zugeführt wird. Weisen diese Düsen eine Ausblasrichtung um mindestens 5 bis 10° zur Horizontalen nach unten auf, so können die Abschirmungen 94 entfallen, da in diesem Fall das Eindringen von Pyrolyserückstand in die Düsen unwahrscheinlich ist. Die Düsen sollen hierbei nicht in den Innenraum 90 hineinragen, damit die Abfuhr des Materials nicht gestört wird. In Fig. 4 ist in eine Einlaßöffnung eine Düse 97 eingezeichnet.

Während des Betriebs wird durch den Speisetrichter 56 eine abgewogene Menge des Abfallmaterials auf das Förderband 54 aufgebracht. Eine der Menge des Abfallmaterials entsprechende Menge Wirbelsand wird aus dem Wirbelsandbehälter 60 entnommen und durch die Rohrleitung 61 direkt in den Pyrolysereaktor eingeführt. Ebenso wird der Zuschlagstoff, insbesondere pulverförmiges Calciumoxid, aus dem Behälter 63 dem Pyrolysereaktor direkt zugeleitet. Nach dem Schließen des ersten Absperrorgans 26 und dem Öffnen des zweiten Absperrorgans 30 wird das Förderband 54 mit Rechtsbewegung in Gang gesetzt, so daß die Materialien vom Förderband in den ersten Einlaßtrichter 32 abgeworfen und sich im ersten Teilkanal 24 sammeln. Sobald dieser Kanal gefüllt ist, wird das Förderband stillgesetzt, das zweite Absperrorgan 30 geschlossen und das erste Absperrorgan 26 geöffnet, so daß das Material durch den ersten Zufuhrkanal 22 zur ersten Förderschnecke 18 gleitet. Durch die innere glatte Auskleidung oder durch die glatte Bearbeitung des ersten Zufuhrkanal erfolgt der Fluß des Materials ohne Stockungen und Verstopfungen von der ersten Schleuseneinrichtung 24 zur ersten Förderschnecke 18. Da der Motor 20 in Betrieb ist, fördert die erste Zufuhrschnecke 18 das zugeführte Material in den Innenraum 12 des Pyrolysereaktors. Im Innenraum 12 ist ein Sand-Wirbelbett mit Hilfe eines durch die Rohrleitungen 62 zugeführten Wirbelgases ausgebildet. Das Wirbelgas besteht hierbei vorzugsweise aus gereinigtem und von Öl befreitem Pyrolysegas. Um die für eine Pyrolyse erforderliche Temperatur von 400 bis ungefähr 800° C zu erreichen, wird das zugeführte Wirbelgas auf entsprechend hohe Temperaturen erhitzt.

Nach dem Einbringen des in der ersten Schleuseneinrichtung 24 vorhandenen Ausgangsmaterials wird das erste Absperrorgan 26 wieder geschlossen und das zweite Absperrorgan 30 geöffnet, so daß das Spiel von Neuem beginnen kann. Vorteilhafter ist es jedoch, den ersten und zweiten Zufuhrkanal 22 bzw. 42 abwechselnd für die Einspeisung des Abfallmaterials in den Pyrolysereaktor 10 zu benutzen. Hierzu wird das Förderband 54 abwechselnd mit einer Förderrichtung nach links und rechts durch den reversierbaren Antriebsmotor in Betrieb genommen. Die Einspeisung durch den ersten oder zweiten Zufuhrkanal 22, 42 erfolgt dann jeweils in der vorbeschriebenen Weise mit Hilfe der ersten bzw. zweiten Schleuseneinrichtung 24 bzw. 44.

Der Pyrolyserückstand tritt aus dem Innenraum 12 durch den Ausgangsstutzen 16 in den Abfuhrkanal 68 ein und gelangt zum Abfuhr-Schneckenförderer 70, der mit Hilfe des Antriebsmotors 72 den Pyrolyserückstand in den Kanal 74 fördert. Die im Kanal 76 eingebaute Auslaßschleuse 76 läßt zwar feste Stoffe ungehindert durchtreten, wirkt aber einem Gasübertritt in die Siebvorrichtung 78 entgegen. In der Siebvorrichtung 78 wird der mitgeführte Wirbelsand einschließlich der noch vorhandenen pulverförmigen Zuschlagstoffe vom eigentlichen stückigen Pyrolyserückstand getrennt und durch die Leitung 80 dem Wirbelsandbehälter 60 zugeführt. Der stückige Pyrolyserückstand wird durch die Leitung 82 abgezogen.

Um Verstopfungen und Materialstockungen in der Abfuhrleitung 68 zu vermeiden, wird durch die Zufuhrleitungen 92 ein gasförmiges Medium in den Innenraum 90 eingebracht, wo es unter Auflockerung des Pyrolyserückstands nach oben zum Innenraum 2 des Pyrolysereaktors strömt. Hierbei verhindern die Abschirmungen 94 ein Eindringen von Pyrolyserückstand in die Zufuhrleitungen 92. Die Zufuhrgeschwindigkeit des gasförmigen Mediums ist hierbei so gewählt, daß der Pyrolyserückstand lediglich aufgelockert wird, eine Verwirbelung wie im Pyrolysereaktor jedoch vermieden wird. Die genaue Größe dieser Zufuhrgeschwindigkeit hängt von der Packungsdichte des Pyrolyserückstands ab und ist durch einen Versuch leicht zu bestimmen. Als gasförmiges Medium, das durch die Rohrleitung 98 und die Ringleitung 96 den Zufuhrleitungen 92 zuströmt, dient vorzugsweise gereinigtes und vom Öl befreites Pyrolysegas, das einer Kühl- und Reinigungsstufe entnommen wird. Die in der Zeichnung nicht dargestellte Reinigungsstufe wird durch die Gasleitung 100, die im oberen Bereich an den Innenraum 12 des Pyrolysereaktors angeschlossen ist, mit dem bei der Pyrolyse entstandenem Rohgas versorgt. Sind Einlaßöffnungen in mehreren Ebenen übereinander angeordnet, so wird das gasförmige Medium den Einlaßöffnungen sämtlicher Ebenen zugeführt.

Unter kleinstückigem Abfallmaterial im Sinne vorliegender Erfindung wird ein Material mit einer Stückgröße von maximal 15 cm, vorzugsweise 8 cm verstanden. Als Stand der Technik diente die DE-OS 35 23 653.

## Ansprüche

1. Verfahren zum thermischen Zersetzen von Kohlenwasserstoffe enthaltendem Abfallmaterial, insbesondere Kunststoff- oder Gummiabfälle enthaltendem Abfallmaterial in einem Wirbelbett-Pyrolysereaktor, wobei der Pyrolysereaktor (10) unter Verwendung mindestens eines von oben nach unten verlaufenden Zufuhrkanals (22, 42) mit dem Abfallmaterial beschickt wird, und der Pyrolyserückstand unter Verwendung mindestens eines von oben nach unten verlaufenden Abfuhrkanals (68) aus dem Pyrolysereaktor (10) entfernt wird, dadurch gekennzeichnet, daß die Beschickung mit Hilfe eines Zufuhrkanals (22, 42) mit glatter und den Fluß des Ausgangsmaterials fördernder Innenfläche erfolgt, und daß der Pyrolyserückstand im Abfuhrkanal (68) zumindet im Bereich der Innenwand in einem den Abfluß des Pyrolyserückstands unterstützenden Ausmaß durch das Einleiten eines gasförmigen Mediums aufgelockert wird.

2. Verfahren nach Anspruch 1, dadurch gekennzeichnet, daß der Pyrolyserückstand in der Nähe der Verbindung von Abfuhrkanal (68) und Pyrolysereaktor (10) aufgelockert wird.

3. Verfahren nach Anspruch 1 oder 2, dadurch gekennzeichnet, daß der Pyrolyserückstand periodisch aufgelockert wird, vorzugsweise in Zeitabständen von 10 bis 30 Sekunden.

4. Verfahren nach einem der Ansprüche 1 bis 3, dadurch gekennzeichnet, daß der Pyrolyserückstand über den gesamten Querschnitt des Abfuhrkanals (68) aufgelockert wird.

5. Wirbelbett-Pyrolysereaktor zur Durchführung des Verfahrens nach einem der Ansprüche 1 bis 4, mit mindestens einem von oben nach unten verlaufenden und an seinen Innenraum (12) angeschlossenen Zufuhrkanal (22, 42) und mindestens einem von oben nach unten verlaufenden Abfuhrkanal (68), der mit dem unteren Endbereich (14) des Innenraums (12) verbunden ist, dadurch gekennzeichnet, daß der Zufuhrkanal (22, 42) auf seiner Innenfläche mit einer Gleitschicht (84), vorzugsweise aus der Gruppe Tetrafluoräthylen, Polytetrafluoräthylen oder Emaille, versehen ist, oder daß der Zufuhrkanal (68) eine Innenwand aufweist, die vorzugsweise durch Bearbeitung wie Schleifen und/oder Polieren geglättet ist, und daß der Abfuhrkanal (68) mit Einlaßöffnungen (93) versehen ist, die an seinem Umfang verteilt angeordnet sind und die für die Zufuhr des gasförmigen Mediums vorgesehen sind.

6. Pyrolysereaktor nach Anspruch 5, dadurch gekennzeichnet, daß der Zufuhrkanal (22,42) an seinem unteren Ende an einen vorzugsweise ungefähr horizontal verlaufende und in den Innenraum (12) des Pyrolysereaktors angeschlossene Förderschnecke (18) mündet.

7. Pyrolysereaktor nach Anspruch 5 oder 6, dadurch gekennzeichnet, daß der Zufuhrkanal (22, 42) an seinem oberen Endbereich eine Einlaufschleuse (24, 44) in Form von zwei mit Abstand vertikal übereinander angeordneten Absperrorgane (26, 30) bzw. (46,50) aufweist.

8. Pyrolysereaktor nach einem der Ansprüche 5 bis 7, dadurch gekennzeichnet, daß das gasförmige Medium im wesentlichen aus bei der Pyrolyse gewonnenem Pyrolysegas besteht.

9. Pyrolysereaktor nach einem der Ansprüche 5 bis 8, dadurch gekennzeichnet, daß zwei Zufuhrkanäle (22, 42) vorgesehen und seitlich des Pyrolysereaktors ungefähr diametral gegenüberliegend angeordnet sind.

10. Pyrolysereaktor nach Ansprüche 9, dadurch gekennzeichnet, daß die Zufuhrkanäle (22, 42) an den oberen Enden mit Einlaßtrichtern (32, 52) versehen sind, daß über den Einlaßtrichtern jeweils der Abwurfbereich eines ungefähr horizontal verlaufenden Förderbandes (54) vorgesehen ist, dessen Förderrichtung zur wechselweisen Beschickung der beiden Zufuhrkanäle (22, 42) umkehrbar ist.

11. Pyrolysereaktor nach Ansprüche 10, dadurch gekennzeichnet, daß das Förderband (54) unter Zwischenschaltung einer Wiegevorrichtung mit dem kleinstückigen Abfallmaterial beschickbar ist.

12. Pyrolysereaktor nach einem der Ansprüche 5 bis 11, dadurch gekennzeichnet, daß das untere Ende des Abfuhrkanals (68) an einen Abfuhr-Schneckenförderer (70) angeschlossen ist, dessen Auslaß unter Zwischenschaltung einer Auslaßschleuse (76), vorzugsweise einer Zellenradschleuse, mit einer Siebmaschine (78) verbunden ist, die das im Pyrolyserückstand mitgeführte Wirbelmedium, vorzugsweise Sand sowie Rückstände der Zuschlagstoffe, abtrennt.

13. Pyrolysereaktor nach einem der Ansprüche 5 bis 12, dadurch gekennzeichnet, daß die Einlaßöffnungen (93) an einem Übergangsstück (64) angeordnet sind, das Bestandteil des Abfuhrkanals (68) ist, und dessen oberes Ende an den Innenraum (12) des Pyrolysereaktors angeschlossen ist.

14. Pyrolysereaktor nach einem der Ansprüche 5 bis 13, dadurch gekennzeichnet, daß mindestens sechs, insbesondere mindestens acht Einlaßöffnungen (93) verteilt am Umfang des Abfuhrkanals (68), vorzugsweise in einer Ebene, angeordnet sind.

15. Pyrolysereaktor nach einem der Ansprüche 5 bis 14, dadurch gekennzeichnet, daß die Einlaßöffnungen (93) mit Düsen (97) versehen sind.

EP 0 297 408 A2

Fig.1

Fig.2

Fig.3

Fig.4